Europäisches Patentamt

European Patent Office

Office européen des brevets

(19)

(11) Veröffentlichungsnummer : **0 089 965**
**B1**

(12) # EUROPÄISCHE PATENTSCHRIFT

(45) Veröffentlichungstag der Patentschrift :
28.11.84

(21) Anmeldenummer : 82902674.9

(22) Anmeldetag : 23.08.82

(86) Internationale Anmeldenummer :
PCT/EP 82/00178

(87) Internationale Veröffentlichungsnummer :
WO/8301057 (31.03.83 Gazette 83/08)

(51) Int. Cl.³ : **B 65 G 39/10**, B 65 G 67/60

(54) **UMLENKVORRICHTUNG FÜR EINE GURTFÖRDERANLAGE.**

**Verbunden mit 82107724.5/89965 (europäische An-
meldenummer/Veröffentlichungsnummer) durch Entscheidung vom 15.02.84.**

(30) Priorität : 25.09.81 DE 3138192

(43) Veröffentlichungstag der Anmeldung :
05.10.83 Patentblatt 83/40

(45) Bekanntmachung des Hinweises auf die Patenterteilung : 28.11.84 Patentblatt 84/48

(84) Benannte Vertragsstaaten :
AT BE CH DE FR GB IT LI NL SE

(56) Entgegenhaltungen :
DE-A- 2 932 113
DE-B- 1 259 781
FR-A-   862 899
GB-A-   795 973
GB-A- 2 066 196

(73) Patentinhaber : **Conrad Scholtz AG
Am Stadtrand 55/59
D-2000 Hamburg 70 (DE)**

(72) Erfinder : **PAELKE, Jürgen
An der Este 13
D-2117 Tostedt (DE)**

(74) Vertreter : **Lieck, Hans-Peter, Dipl.-Ing.
Lieck & Betten Patentanwälte Maximiliansplatz 10
D-8000 München 2 (DE)**

## Beschreibung

Die Erfindung betrifft eine Umlenkvorrichtung für eine Förderanlage für Schüttgut nach dem Oberbegriff des Anspruches 1.

Derartige Umlenkvorrichtungen sind beispielsweise in in einem Hafen installierten Förderanlagen zur Ent- oder Beladung von Schüttgut aus einem Schiff vorgesehen, wobei die Förderanlage einen an einem Portal angelenkten Ausleger umfaßt, dessen freies Ende über ein Seil zwischen einer unteren und einer oberen Endstellung verschwenkt werden kann. An dem freien Ende des Auslegers ist um eine vertikale Achse schwenkbar ein senkrechtes Tragegerüst aufgehängt, an dessen unteren Ende die Aufnahme eines Schüttgutes beispielsweise aus einem Schiff erfolgt. Als Fördermittel ist dabei ein einziger Wellenkantengurt vorgesehen, der vom unteren Ende des Tragegerüstes über den Ausleger bis auf das Portal führt. Am Übergang vom oberen Ende des Tragegerüstes zu dem freien Ende des Auslegers ist eine Umlenkvorrichtung vorgesehen, bei der das Rücktrum des Fördergutes über eine einzige Umlenktrommel und das Fördertrum über mehrere parallel zueinander angeordnete Umlenkrollen in Form einer sogenannten Rollenkurve geführt ist.

Diese Umlenkvorrichtung weist aber einen Nachteil auf. So beträgt beispielsweise der Winkel zwischen dem Ausleger und dem senkrechten Tragegerüst in der oberen Endstellung des Auslegers 30°, währenddessen dieser Winkel in der unteren Endstellung des Auslegers beispielsweise 110° aufweist. D. h., daß das Fördertrum in der oberen Endstellung des Auslegers um 150° und in der unteren Endstellung nur um 70° in die Senkrechte des Tragegerüstes umgelenkt werden muß. Sind aber die Umlenkrollen auf einem Kreisabschnitt von beispielsweise 150° starr angeordnet, so treten Probleme beim Senken des Auslegers auf. In diesem Falle nämlich muß ein hinreichend großer Abstand zwischen dem Rücktrum und dem Fördertrum im Bereich der Umlenkstelle vorgesehen sein, da beim Senken des Auslegers die auf einem Kreisabschnitt von beispielsweise 150° angeordneten Umlenkrollen vom freien Ende des Auslegers aus auf das Rücktrum hin verschoben werden, so daß das Ende der Rollenkurve im Bereich des oberen Endes des senkrechten Tragegerüstes, wenn der Abstand zwischen Förder- und Rücktrum nicht groß genug ist, das Rücktrum berührt und somit beschädigen kann.

Aufgabe der Erfindung ist es, eine Umlenkvorrichtung für eine Gurtförderanlage zwischen zwei einen unterschiedlichen Winkel einschließenden Förderstrecken zu schaffen, die einen minimalen Bauraum beansprucht.

Die Aufgabe wird erfindungsgemäß mit der im Anspruch 1 und bezüglich vorteilhafter Ausgestaltungen im Sinne des Aufgabenstellung in den Unteransprüchen gekennzeichneten Umlenkvorrichtungen gelöst.

Mit der erfindungsgemäßen Umlenkvorrichtung ist es möglich, den Abstand zwischen dem Rück- und dem Fördertrum im Bereich des Auslegers, des senkrechten Tragegerüstes wie auch im Umlenkbereich konstant schmal zu halten. Dies wird dadurch möglich, daß die Rollenkurve für die Umlenkrollen an ihrem unteren Ende im Bereich des oberen Endes des senkrechten Tragegerüstes nicht starr, sondern flexibel so ausgebildet ist, daß zwar die Umlenkrollen in der oberen Endstellung alle auf einem Bogenabschnitt angeordnet sind, daß aber beim Absenken des Auslegers die unteren Umlenkrollen nacheinander aufgrund des Schwerkraft senkrecht herabhängen.

In einer vorteilhaften Ausgestaltung der erfindungsgemäßen Umlenkeinrichtung nach Anspruch 2 ist dies dadurch möglich, daß die unteren Umlenkrollen durch Kettenglieder miteinander verbunden sind, deren jeweilige Seitenflächen, die angrenzend zu einem benachbarten Kettenglied liegen, konisch zulaufen, so daß beim Anheben des Auslegers diese Kettenglieder, die die Umlenkrollen tragen, sich bogenförmig aneinander schließen.

In einer bevorzugten Ausführungsform nach Anspruch 3 sind dabei nur so viele Kettenglieder vorgesehen, daß die Umlenkung des Fördertrums in einer maximalen Betriebsstellung, in der Schüttgut aus einem großen Behälter, beispielsweise einem Schiff gefördert wird, nur über die starr befestigten Umlenkrollen erfolgt. In diesem Falle erfolgt die bogenförmige Aneinanderreihung aller Umlenkrollen nur in einer oberen Ruhestellung des Auslegers, in der er nicht fördert. Da in diesem Falle an dem Fördertrum nur erheblich geringere Kräfte ansetzen als während des Förderbetriebes, brauchen die Kettenglieder bezüglich einer so großen Belastung nicht ausgelegt werden.

In einer vorteilhaften Ausgestaltung nach Anspruch 4 ist eine relativ zu dem am Ausleger befestigten starren Bogenabschnitt verschiebbare Bogenschiene vorgesehen, an der die kettenförmig miteinander verbundenen unteren Umlenkrollen mit ihren an den jeweiligen Stirnflächen der Umlenkrollen überstehenden Achsabschnitten beim Anheben des Auslegers zur Anlage kommen. Während des Hebevorganges des Auslegers werden so die unteren Umlenkrollen nacheinander auf die Bogenschiene aufgelegt, bis alle Umlenkrollen auf einem Kreisabschnitt in der oberen Endstellung des Auslegers angeordnet sind.

In einer vorteilhaften Ausgestaltung nach Anspruch 5 erfolgt dabei die Verschiebung der Bogenschiene in Abhängigkeit von der Stellung des Auslegers automatisch.

In einer bevorzugten Ausführungsform nach Anspruch 6 ist die verschiebbare Bogenschiene an den senkrechten Tragegerüst befestigt. Die Anordnung ist dabei derart, daß der Kreismittelpunkt der Bogenschiene identisch ist mit dem des starr angeordneten Bogenabschnitts so daß bei einem Heben und Senken des Auslegers die Bogenschiene automatisch so verschoben wird, daß der die Umlenkung des Fördertrums bewirkende Bogenabschnitt entsprechend jeder Stellung des Auslegers vergrößert bzw. verkleinert wird.

Weitere Ziele, Merkmale und Vorteile der Erfindung ergeben sich aus der folgenden Beschreibung der in den Zeichnungen dargestellten Ausführungsbeispiele. Dabei zeigen im einzelnen

Figur 1 eine Förderanlage mit einer Umlenkeinrichtung

Figuren 2a bis 2c schematisch eine erste Ausführungsform der erfindungsgemäßen Umlenkeinrichtung zwischen einem Ausleger und einem senkrechten Tragegerüst in verschiedenen Betriebsstellungen ;

Figur 3 eine schematische, vergrößerte Teilansicht der Umlenkeinrichtung ;

Figur 4 schematisch eine Seitenansicht einer zweiten Ausführungsform der erfindungsgemäßen Umlenkvorrichtung zwischen dem Ausleger und dem senkrechten Tragegerüst ;

Figur 5 einen Ausschnitt in der Umlenkvorrichtung nach Fig. 4 in einer Teilansicht.

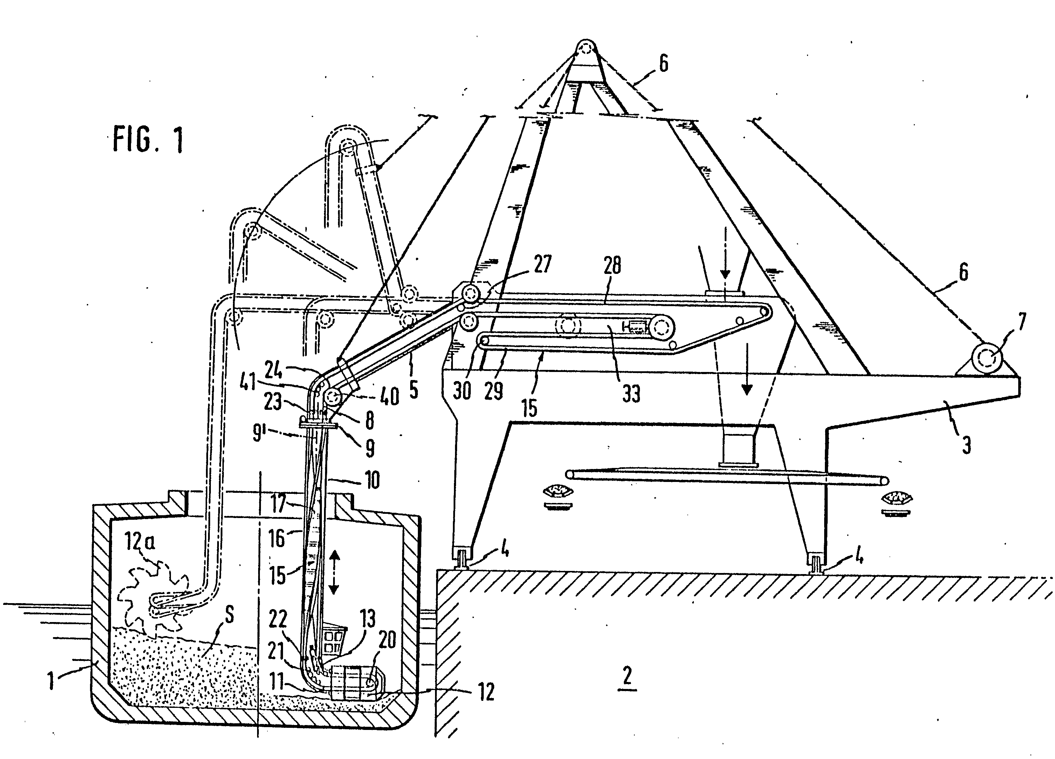

Die in Fig. 1 gezeigte Förderanlage für ein Schüttgut S, z. B. Kohle, ist in einem Hafen installiert und dient zur Entladung von Schiffen 1, die am Kai 2 liegen. Die Förderanlage umfaßt dabei ein Portal 3, das am Kai auf Schienen 4 längs des Schiffes 1 verfahrbar ist.

Auf dem Portal 3 ist ein Ausleger 5 angeordnet, der über das Schiff 1 reicht und in einer vertikalen Ebene um eine zu den Schienen 4 parallele Achse verschwenkbar ist. Hierbei ist der Ausleger 5 portalseitig an ein nicht näher gezeigtes Auslegergerüst angelenkt, das auf dem Portal quer zu den Schienen 4 in horizontaler Richtung verschiebbar ist, wodurch auch der Ausleger in jeder Schwenkstellung horizontal verlagerbar ist, wie es mit strichpunktierten Linien angedeutet ist. Die Verschwenkung des Auslegers 5 geschieht mittels eines Seiles 6, das zu einer Seilwinde 7 führt. An seinem freien Ende weist der Ausleger 5 ein Endstück 8 auf, das gegenüber dem eigentlichen Ausleger 5 um eine horizontale, zu den Schienen 4 parallele Querachse schwenkbar ist und in jeder Schwenkstellung des Auslegers senkrecht nach unten weist.

An dem Endstück 8 ist ein horizontaler Kugel-Drehkranz 9 angebracht, über welchen ein senkrechtes Tragegerüst 10 an dem Endstück 8 und damit dem Ausleger 5 aufgehängt ist. Der Drehkranz 9 definiert eine vertikale, durch siene Mitte gehende Schwenkachse 9', um welche das Tragegerüst 10 gegenüber dem Ausleger 5 schwenkbar ist. Fig. 1 zeigt das Tragegerüst strichpunktiert in sogenannter Normal-Stellung und ausgezogen in einer demgegenüber um 180° gedrehten Stellung.

Am unteren Ende ist an das Tragegerüst 10 ein kurzer Querausleger 11 angelenkt, der ein Schaufelrad 12 oder 12a für das Schüttgut S trägt.

Der Ausleger 5, sein Endstück 8 und das Tragegerüst 10 sind jeweils als selbsttragendes, geschlossenes Rohr ausgebildet. Alle Rohre haben den gleichen Durchmesser. Auch der Innendurchmesser des Drehkranzes 9 stimmt mit dem der Rohre überein. Am Übergang zwischen dem Ausleger 5 und seinem Endstück 8 und ebenso am Übergang zwischen dem Tragegerüst 10 und dem Querausleger 11 ist jeweils in nicht näher gezeigter Weise eine Lamellenabdeckung vorgesehen, welche den durch die Rohre gebildeten Raum auch am jeweiligen Übergang in jeder Schwenkstellung geschlossen hält.

Die Förderanlage ist mit einem einzigen, vom Aufnahmegerät 12 bis zum Portal 3 durchgehenden Fördergurt 15 versehen, der als sogenannter Wellenkantengurt ausgebildet ist, also zwei seitlich aufgesetzte Wellenkanten 16 aufweist, zwischen denen sich in regelmäßigem Längsabstand quer ausgerichtete Mitnehmer 17 befinden, die einen winkelförmige-Querschnitt haben und so zusammen mit den Wellenkanten becherförmige Kammern zur Aufnahme des Schüttgutes S bilden.

Im einzelnen ist der Fördergurt 15 von einer Endtrommel 20 an freien Ende des Querauslegers 11 über eine Umlenkvorrichtung 21 am Übergang vom Querausleger 11 zum Tragegerüst 10, eine unmittelbar anschließende, untere Führungseinrichtung 22, eine obere Führungseinrichtung 23 im Endstück 8, eine anschließende Umlenkeinrichtung 23 am Übergang zwischen dem Endstück und dem Ausleger 5 und über eine Umlenkeinrichtung 27 am Übergang zwischen Ausleger und Auslegergerüst zu einer am Portal gelagerten, angetriebenen Endtrommel 30 geführt.

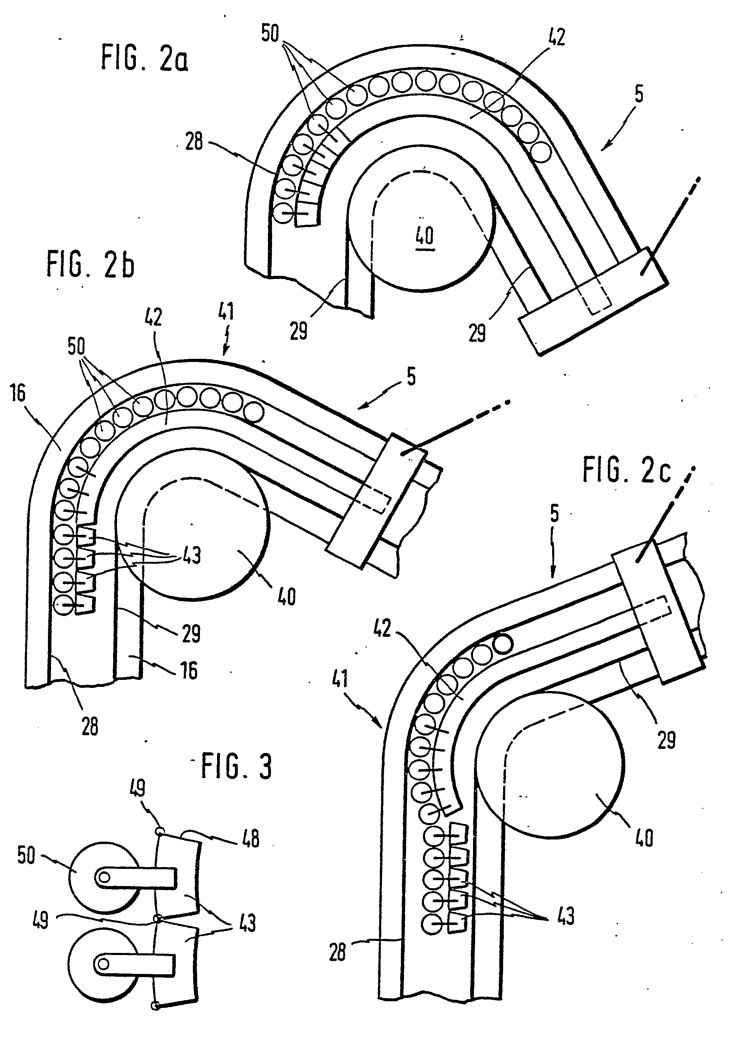

Dabei ist der Fördergurt 15 mit seinem Fördertrum 28 und seinem Rücktrum 29 innerhalb der Rohre des Tragegerüstes 10, des Endstückes 8 und des Auslegers 5 geführt. Die Umlenkeinrichtung 24 umfaßt eine Umlenktrommel 40 für das Rücktrum 29 und eine sogenannte Rollenkurve 41, um die das Fördertrum 28 geführt ist. Die Rollenkurve 41 setzt sich dabei, wie insbesondere aus den Fig. 2a-2c hervorgeht, aus einem starren Bogenabschnitt 42 und Kettengliedern 43 zusammen, die am unteren Ende des Bogenabschnittes 42 angeordnet sind. Die Rollenkurve 41 umfaßt dabei entsprechend dem Umlenkbogen angeordnete Rollen mit vergleichsweise kleinem Durchmesser. Dabei ist der Bogenabschnitt 42, der einen Teil der Rollen trägt, an dem Ausleger 5 starr befestigt. Die Kettenglieder 43, die die restlichen Rollen tragen, sind vom unteren Ende des Bogenabschnittes 42 ausgehend aneinander angelenkt. Dabei weisen die Kettenglieder 43 konisch zulaufende Seitenflächen 48 auf, wodurch ein trapezförmiger Querschnitt gebildet wird. Die Kettenglieder sind dabei über Scharniere 49 miteinander verbunden, die an den Ecken des so gebildeten breiteren Basisabschnittes der Kettenglieder 43 angeordnet sind, wie insbesondere aus Fig. 3 hervorgeht.

In Fig. 2a ist der Ausleger 5 mit dem daran vorgesehenen Tragegerüst 10 in seiner oberen Ruhestellung gezeigt, in der kein Förderbetrieb stattfindet. Beim Anheben des Auslegers 5 in diese Ruhestellung kommen die Kettenglieder 43 mit ihren konischen Seitenflächen 48 an einem benachbarten Kettenglied 43 zur Anlage und bilden so einen maximalen Bogenabschnitt, um den das Fördertrum 28 umgelenkt wird. In dem gezeigten Ausführungsbeispiel wird dabei das Fördertrum 28 um ungefähr 150° vom Ausleger 5 zu dem senkrechten Tragegerüst 10 umgelenkt.

Fig. 2c zeigt den Ausleger 5 mit der Umlenkeinrichtung 24 in seiner unteren Endstellung, bei der die unteren Kettenglieder 43, die über die Scharniere 49 miteinander verbunden sind, aufgrund der Schwerkraft senkrecht herabhängen. Da deshalb die Rollenkurve 41 keinen großen Bauraum beansprucht, können das Rücktrum 28 und das Fördertrum 29 auch im Umlenkbereich mit einem vergleichsweise geringen Abstand zueinander geführt sein.

Fig 2b zeigt eine maximale obere Betriebsstellung, in der noch ein Förderbetrieb durchgeführt wird. Dabei ist der starre Bogenabschnitt 42 so ausgeführt, daß in dieser oberen Betriebsstellung eine Umlenkung des Fördertrums 28 ausschließlich über die an dem starren Bogenabschnitt 42 angeordneten Rollen 50 erfolgt. Eine weitere Umlenkung auch über die in dieser oberen maximalen Betriebsstellung noch frei herabhängenden Rollen 50, die an den Kettengliedern 43 hängen, erfolgt ausschließlich bei einer weiteren Verschwenkung in die obere Ruhestellung nach Fig. 2a. Aufgrund dieser Anordnung wird sichergestellt, daß im Gegensatz zur Ruhestellung die im Betrieb der Förderanlage an dem Fördertrum ansetzenden Kräfte lediglich über das starre Bogenglied 42 und nicht über die an den Kettengliedern 43 befestigten Rollen 50 abgestützt sind. Aufgrund dessen brauchen die Kettenglieder 43 nicht für die während des Förderbetriebes größeren Kräfte ausgelegt zu werden.

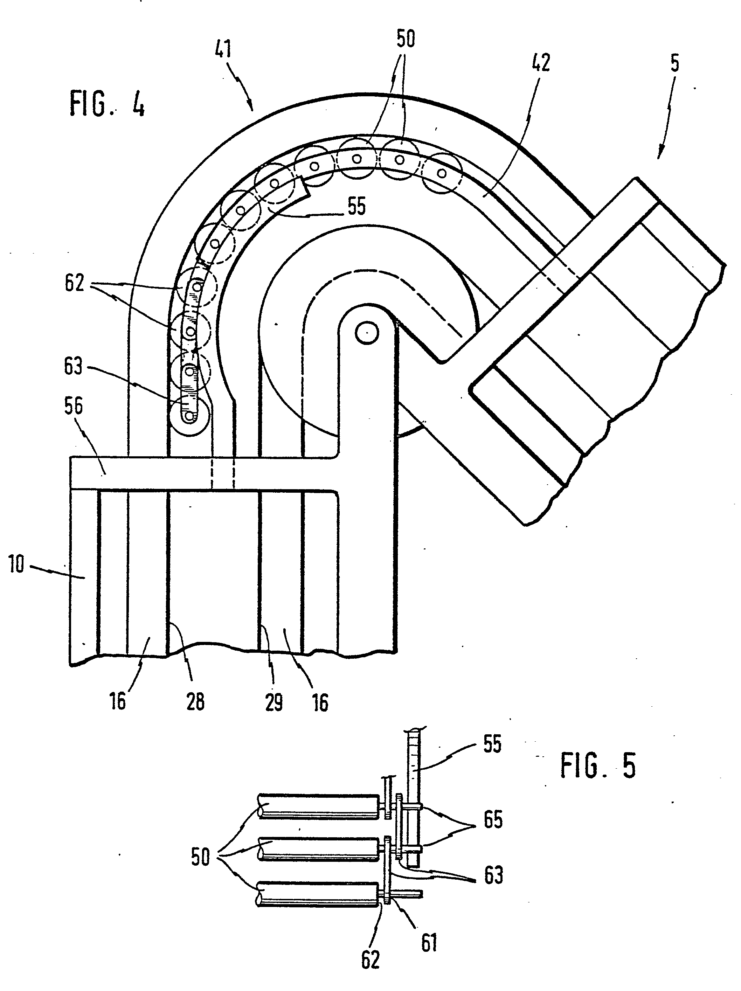

In den Fig. 4 und 5 ist ein anderes Ausführungsbeispiel gezeigt. Am unteren Ende des starr an dem Ausleger 5 befestigten Bogenabschnittes 42 der Rollenkurve 41 ist hier eine verschiebbare Bogenschiene 55 vorgesehen, die an dem oberen Ende 56 des senkrechten Tragegerüstes 10 befestigt ist. In diesem Ausführungsbeispiel sind die unteren Rollen 50 durch Kettenglieder 63 miteinander verbunden. Dazu sind an Stirnflächen 62 der Rollen 50 jeweils überstehende Achsabschnitte 65 vorgesehen, die durch Öffnungen 61 in den Kettengliedern 63 ragen.

In einer in Fig. 4 gezeigten Betriebsstellung hängen die durch die Kettenglieder 63 gehaltenen unteren Rollen 50 teilweise aufgrund der Schwerkraft senkrecht herab, weshalb der Abstand zwischen dem Rücktrum 29 und dem Fördertrum 28 hinreichend eng gehalten werden kann. Während eines Schwenkvorganges in die obere Ruhestellung werden die durch die Kettenglieder 63 an dem feststehenden Bogenabschnitt 42 gehaltenen unteren Rollen 50 relativ zu dem senkrechten Tragegerüst 10 angehoben, wobei die überstehenden achsabschnitte 65 an der äußeren Umfangslinie 68 der Bogenschiene 55 zur Anlage kommen, die an dem senkrechten Tragegerüst 10 befestigt ist. Aufgrund dieser Anordnung wird der Bogenabschnitt in der Umlenkvorrichtung 24 entsprechend jeder beliebigen Arbeitsstellung vergrößert bzw. verkleinert.

Das Ausführungsbeispiel nach den Figuren 4 und 5 erscheint derzeit als der beste Weg zur Ausführung der Erfindung.

## Ansprüche

1. Umlenkvorrichtung für eine Gurtförderanlage für Schüttgut mit einem um eine Drehachse zwischen einer unteren und einer oberen Endstellung verschwenkbaren Ausleger (5), an dessen freien Ende ein senkrechtes Tragegerüst (10) aufgehängt ist, und mit einem in dem Ausleger und dem Tragegerüst vorgesehenen, ein Förder- (28) und ein Rücktrum (29) aufweisenden Fördergurt (15), wobei das Fördertrum (28) zwischen dem oberen Ende des Tragegerüstes (10) und dem freien Ende des Auslegers (5) über mehrere, in Form einer Rollenkurve (41) angeordnete Rollen (50) umgelenkt wird, dadurch gekennzeichnet, daß die Rollenkurve (41) einen starren Bogenabschnitt (42) und im Bereich des oberen Endes des senkrechten Tragegerüstes (10) verschwenkbare Kettenglieder (43 ; 63) aufweist, die die Rollen (50) halten, und daß beim Verschwenken des Auslegers (5) in seine obere Endstellung nacheinander alle Kettenglieder (43 ; 63) über Haltemittel (konisch zulaufende Seitenwände 48 ; Bogenschiene 55) auf einem Kreisabschnitt angeordnet sind.

2. Umlenkvorrichtung nach Anspruch 1, dadurch gekennzeichnet, daß die Kettenglieder (43) konisch zulaufende Seitenwände (48) aufweisen und an ihrem so gebildeten breiteren Basisabschnitt aneinander angelenkt sind (Scharniere 49).

3. Umlenkvorrichtung nach Anspruch 1 oder 2, dadurch gekennzeichnet, daß die Kettenglieder (43) in dem Bereich zwischen einer unteren und einer oberen maximalen Betriebsstellung aufgrund der Schwerkraft frei herabhängen.

4. Umlenkvorrichtung nach Anspruch 1, dadurch gekennzeichnet, daß die durch die Kettenglieder (63) gehaltenen Rollen (50) an ihren Stirnflächen (62) überstehende Achsenabschnitte (65) aufweisen, und daß als Haltemittel eine Bogenschiene (55) vorgesehen ist, die beim Anheben des Auslegers (5) von der unteren zur oberen Endstellung so ausfahrbar ist, daß an der Oberseite der Bogenschiene (55) die überstehenden Achsabschnitte (65) zur Anlage kommen.

5. Umlenkvorrichtung nach Anspruch 1 oder 4, dadurch gekennzeichnet, daß die Verstellung der verschiebbaren Bogenschiene (55) in Abhängigkeit von der Stellung des Auslegers (5) automatisch erfolgt.

6. Umlenkvorrichtung nach Anspruch 1, 4 oder 5, dadurch gekennzeichnet, daß der Kreismittelpunkt des starren Bogenabschnittes (42) identisch ist mit dem Kreismittelpunkt der Bogenschiene (55) und daß die Bogenschiene (55) an dem senkrechten Tragegerüst (10) starr befestigt ist.

### Claims

1. Deflector device for a belt conveyor plant for bulk material comprising a jib (5) swingable about a pivot spindle between a bottom and top limit positions, from whose free extremity is suspended a vertical carrying frame (10), and comprising a conveyor belt (15) situated in the jib and the carrying frame and having a conveying leg (28) and a return leg (29), the conveying leg (28) being deflected between the top extremity of the carrying frame (10) and the free extremity of the jib (5) by means of several rollers (50) arranged in the form of a roller elbow (41), characterised in that the roller elbow (41) has a rigid arcuate section (42) and — in the area of the upper extremity of the vertical carrying frame (10) — pivotable chain links (43 ; 63) which hold the rollers (50), and that whilst the jib (5) is being swung into its upper limit position, all the chain links (43 ; 63) are consecutively positioned along an arc of a circle by means of securing devices (conically converging sidewalls 48 ; arcuate rail 55).

2. Deflector device according to claim 1, characterised in that the chain links (43) comprise conically converging sidewalls (48) and are articulated to each other (hinges 49) at their wider base section thus formed.

3. Deflector device according to claim 1 or 2, characterised in that the chain links (43) are caused by force of gravity to hang down freely in the area between a lower and an upper maximum operating positions.

4. Deflector device according to claim 1, characterised in that the rollers (50) held by the chain links (63) comprise projecting spindle sections (65) at their end faces (62), and that an arcuate rail (55) is provided as a securing device, which upon raising the jib (5) from the bottom to the top terminal position may be extended in such manner that the projecting spindle sections (65) are placed in contact on the upper side of the arcuate rail (55).

5. Deflector device according to claim 1 or 4, characterised in that the displacement of the movable arcuate rail (55) occurs automatically as a function of the position of the jib (5).

6. Deflector device according to claims 1, 4 or 5, characterised in that the centre of curvature of the rigid arcuate section (42) is identical to the centre of curvature of the arcuate rail (55) and that the arcuate rail (55) is rigidly secured on the vertical carrying frame (10).

### Revendications

1. Dispositif de détour pour une installation de transport à bande sans fin pour matières en vrac, comprenant d'une part un bras (5) orientable autour d'un axe de rotation entre une position extrême inférieure et une position extrême supérieure, et à l'extrémité libre duquel est suspendue une jambe porteuse verticale (10), et d'autre part une bande transporteuse (15) qui est prévue dans le bras et dans la jambe porteuse et présente un brin transporteur (28) et un brin de retour (29), tandis qu'entre l'extrémité supérieure de la jambe porteuse (10) et l'extrémité libre du bras (5), le brin transporteur (28) est détourné sur plusieurs rouleaux (50) disposés en forme de courbe de rouleaux (41), caractérisé en ce que la courbe de rouleaux (41) présente, tenant les rouleaux (50), d'une part un arc de cercle rigide (42) et, d'autre part des chaînons pivotants (43 ; 63) situés au voisinage de l'extrémité supérieure de la structure porteuse (10), et en ce que lorsque le bras (5) s'oriente vers la position extrême supérieure, tous les chaînons (43 ; 63) se disposent successivement selon un arc de cercle, par l'intermédiaire de moyens de retenue (parois latérales convergeant coniquement 48 ; rail courbe 55).

2. Dispositif de détour selon la revendication 1, caractérisé en ce que les chaînons (43) présentent des parois latérales convergeant coniquement (48) et sont articulés les uns aux autres par leur grande base ainsi formée (charnières 49).

3. Dispositif de détour selon l'une des revendications 1 et 2, caractérisé en ce que dans la zone située entre une position de service extrême inférieure et une position de service extrême supérieure, les chaînons (43) pendent librement sous l'effet de leur poids.

4. Dispositif de détour selon la revendication 1, caractérisé en ce que les rouleaux (50) maintenus par les chaînons (63) présentent sur leur face frontale (62) des saillies axiales (65), et en ce que comme moyen de retenue est prévu un rail courbe (55) qui lorsque l'arbre (5) se soulève de sa position extrême inférieure à sa position extrême supérieure peut se déployer de manière telle que les saillies axiales (65) viennent en appui sur le côté supérieur du rail courbe (55).

5. Dispositif de détour selon l'une des revendications 1 et 4, caractérisé en ce que le réglage du rail courbe déplaçable (55) s'effectue automatiquement en fonction de la position du bras (5).

6. Dispositif de détour selon l'une des revendications 1, 4 ou 5, caractérisé en ce que le centre du cercle de l'arc de cercle rigide (42) est confondu avec le centre du rail courbe (55) et en ce que le rail courbe (55) est fixé rigidement à la jambe porteuse verticale (10).

FIG. 1

FIG. 2a

FIG. 2b

FIG. 2c

FIG. 3

FIG. 4

FIG. 5